# EUROPÄISCHE PATENTSCHRIFT

(11) **EP 4 230 903 B1**
(45) Veröffentlichungstag und Bekanntmachung des Hinweises auf die Patenterteilung: **03.04.2024**
(21) Anmeldenummer: 22158011.1
(22) Anmeldetag: 22.02.2022
(51) Int. Cl.: F16L 3/16, F16L 3/22

(54) **VORRICHTUNG ZUR BEFESTIGUNG VON ROHREN ODER LEITUNGEN**
DEVICE FOR FIXING OF PIPES OR CONDUITS
DISPOSITIF DE FIXATION DE TUYAUX OU DE CONDUITS

(43) Veröffentlichungstag der Anmeldung: 23.08.2023
(73) Patentinhaber: WALTER STAUFFENBERG GMBH & CO. KG, 58791 Werdohl (DE)
(72) Erfinder: Epp, Elena, 58849 Herscheid (DE); König, Ulrich Stefan, 58849 Herscheid (DE); Schulz, Matthäus, 57439 Attendorn (DE)
(74) Vertreter: Patentanwälte Dörner & Kötter PartG mbB

(56) Entgegenhaltungen:
- DE-A1- 19 628 689
- DE-U- 7 423 062
- DE-U1-202004 004 425
- DE-U1-202009 007 263
- US-A- 2 417 260
- US-A- 3 087 009
- US-A1- 2016 076 689

## Beschreibung

Die Erfindung betrifft eine Vorrichtung zur Befestigung von Rohren oder Leitungen, insbesondere im Bereich Schiffbau und Offshore-Plattformen, umfassend wenigstens eine Schelle, die ein erstes Schellenteil und ein zweites Schellenteil umfasst, die jeweils eine Ausnehmung aufweisen, die im montierten Zustand eine Durchführung zur Aufnahme eines Rohres ausbilden, in der beabstandet zueinander wenigstens drei Rippen zur Anlage an einem aufgenommenen Rohr angeordnet sind, die sich in Längsrichtung dieses Rohres erstrecken.

In küstennahen Gebieten sowie bei Schiffbau- und Offshore-Anwendungen werden zur Vermeidung von Korrosion bei medienführenden Leitungen regelmäßig Edelstahlrohre eingesetzt. Diese Anwendungsgebiete zeichnen sich aus durch eine feuchte bis nasse Umgebung, verbunden mit den Einflüssen, welche durch die in der Luft und im Wasser enthaltenen Salzkonzentrationen bedingt sind. Der durch die Edelstahlrohre erzielbare Korrosionsschutz hat sich bewährt. Derartige Leitungen müssen geführt und gehalten werden. Dieses erfolgt regelmäßig mittels Rohrbefestigungen, welche häufig radiale oder longitudinale Rippen aufweisen, zwischen denen das Rohr eingespannt wird.

Die Rohrleitungen, einschließlich der Befestigungen sind dem Wetter ausgesetzt, sie werden durch Regen, Nebel oder Gischt mit Wasser benetzt. Dabei trocknen die offenen Flächen ohne Probleme ab. Problematisch ist jedoch, dass die Zwischenräume, die sich zwischen den Rippenoberflächen und dem Rohr bilden, nur unzureichend trocknen. Hierdurch bleibt ein Flüssigkeitsfilm bestehen, welcher zur Spaltkorrosion führen kann. Durch diese Spaltkorrosion wird die Oberfläche des Edelstahlrohres angegriffen. Aus diesem Grunde werden die Rohrbefestigungen üblicherweise von den Anwendern einmal im Jahr geöffnet. Wird keine Spaltkorrosion festgestellt, wird die Rohrbefestigung wieder montiert. Andernfalls muss neben der Rohrbefestigung auch noch das komplette Rohr ausgetauscht werden, wodurch ein hoher Zeit- und Kostenaufwand verursacht ist.

Zur Verbesserung des Korrosionsschutzes ist es bekannt, die Befestigungsstelle mit einem speziellen Korrosionsschutzband zu umwickeln. Der hierdurch erzielte Korrosionsschutz ist gut, allerdings gestaltet sich der Aufwand sehr hoch. Insbesondere ist die jährliche Inspektion erschwert, da das Rohr an der zu prüfenden Position mit dem Band umwickelt ist. Ebenso wurden gute Ergebnisse bei Verwendung einer speziellen Oberflächenversiegelung erzielt, welche jedoch wiederum mit einem hohen Aufwand insbesondere bei der jährlichen Inspektion verbunden ist.

In der DE 20 2009 007 263 U1 ist vor diesem Hintergrund eine Vorrichtung zur Befestigung eines Rohres beschrieben, bei der die Rippen innerhalb der Durchführung als Längsrippen entlang der Rohrachse verlaufend zur Rohrachse hingerichtet ausgebildet sind. Diese Lösung hat sich in der Praxis bewährt. Durch das Vorsehen von Längsrippen ist eine gute Durchlüftung der Befestigungsstelle erzielt, wodurch ein schnelles Abtrocken von Feuchtigkeitsfilmen bewirkt ist. Die Ausgestaltung in Längsrippen ermöglicht darüber hinaus das Abfließen von Flüssigkeiten seitlich aus der Rohrbefestigung hinaus. Die Längsrippen sind in der Praxis regelmäßig als Elastomerstreifen ausgebildet, wodurch eine hervorragende Beständigkeit gegen Kontaktkorrosion erreicht wird. Die Elastomerstreifen weisen dabei einen trapezförmigen Querschnitt auf. Es hat sich als entscheidend erwiesen, dass die Abschlusskanten von Elastomerstreifen zum Rohr in einem stumpfen Winkel ausgeführt werden.

Bei der Befestigung von Rohren werden häufig Mehrfachschellen, sogenannte "Multiclamps" eingesetzt, die mehrere Durchführungen zur Aufnahme von Rohren aufweisen und so eine Befestigung mehrerer Rohre auf engem Raum ermöglichen. Hierbei erweist sich jedoch als problematisch, dass zur Erzielung der optimalen Beständigkeit gegen Kontaktkorrosion die Rohre möglichst exakt konzentrisch und ohne Winkelabweichungen durch die Schelle laufen müssen. Winkelabweichungen der zu befestigenden Rohre sind jedoch nur selten und mit hohem Aufwand zu vermeiden. In der US 2016/0076689 A1 ist weiterhin eine vibrationsdämmende Rohrschelle zur Aufnahme von Rohren unterschiedlicher Durchmesser offenbart.

Hier will die Erfindung Abhilfe schaffen. Der Erfindung liegt die Aufgabe zugrunde, eine Vorrichtung zur Befestigung von Rohren bereitzustellen, die auch bei Winkelabweichungen der zu befestigenden Rohre einen exakt konzentrischen Verlauf durch die Schelle ermöglicht. Gemäß der Erfindung wird diese Aufgabe durch eine Vorrichtung mit den Merkmalen des kennzeichnenden Teils des Patentanspruchs 1 gelöst.

Mit der Erfindung ist eine Vorrichtung zur Befestigung von Rohren, insbesondere im Bereich Schiffbau und Offshore-Plattformen bereitgestellt, bei der ein exakt konzentrischer Verlauf der jeweiligen Rohre durch die Schelle auch bei Winkelabweichungen der Rohre gewährleistet ist. Dadurch, dass zwei Spannschienen angeordnet sind, wobei das erste Schellenteil der wenigstens einen Schelle an der ersten Spannschiene und das zweite Schellenteil der wenigstens einen Schelle an der zweiten Spannschiene justierbar befestigt sind, wobei die beiden Spannschienen gegenüberliegend über Spannmittel verbunden sind, über die sie gegeneinander verspannbar sind, ist ein Verspannen der gegenüberliegend angeordneten ersten und zweiten Schellenteile der angeordneten Schellen gegen die jeweils von diesen aufgenommenen Rohre ermöglicht, wobei jede einzelne Schelle zwischen den beiden Spannschienen in ihrer Lage justierbar ist.

Unter einer "justierbaren Befestigung" ist nachfolgend eine Befestigung zu verstehen, die derart ausgebildet ist, dass die Position der Schelle relativ zur Spannschiene in einem definierten Winkelbereich veränderbar ist. Vorzugsweise ist die justierbare Befestigung derart ausgebildet, dass sie eine Lageveränderung der Schelle relativ zur Spannschiene von bis zu +/- 3° ermöglicht.

Durch die Gewährleistung eines exakt konzentrischen Verlaufs der jeweiligen Rohre innerhalb einer Schelle ist ein stumpfer Winkel zwischen den Abschlusskanten der Längsrippen zum jeweiligen Rohr gewährleistet, wodurch eine hohe Qualität der Beständigkeit gegen Kontaktkorrosion erzielt ist.

Die beiden Spannschienen sind jeweils mit Durchbrüchen versehen, wobei die ersten und zweiten Schellenteile jeweils wenigstens ein Befestigungselement aufweisen, das eine dieser Durchbrüche diesen durchdringend hintergreift. Hierdurch ist eine Vormontage der ersten und zweiten Schellenteile an den beiden Spannschienen ermöglicht.

In Ausgestaltung der Erfindung sind wenigstens zwei, vorzugsweise jedoch alle Durchbrüche rechteckig ausgebildet und gleichmäßig beabstandet parallel zueinander in der jeweiligen Spannschiene angeordnet. Hierdurch ist ein definierter, gleichmäßiger Abstand zwischen einzeln angeordneten Schellen gewährleistet.

Die Schellenteile weisen zwei Befestigungselemente auf, die in Form von gegenüberliegend angeordneten mit Rastnasen versehenen Federzungen ausgebildet sind, wobei die Rastnasen jeweils in die der gegenüberliegenden Federzunge abgewandten Richtung erstrecken und den jeweiligen Durchbruch hintergreifen. Hierdurch ist eine einfache, rastende Montage der einzelnen Schellenteile an einer Spannschiene ermöglicht. Dabei sind die Schellenteile einfach demontierbar, sodass sie bedarfsweise ausgetauscht werden können, beispielsweise, wenn Rohre unterschiedlicher Durchmesser nebeneinander zu befestigen sind.

Die Schellenteile weisen zwischen den beiden Befestigungsteilen einen vorzugsweise zylinderförmigen Führungsdom auf, der durch den jeweiligen Durchbruch hindurchragt. Hierdurch ist ein Verkippen der Schelle im Zuge einer Winkeljustierung durch den winkligen Verlauf eines aufzunehmenden Rohres verhindert.

In Weiterbildung der Erfindung weisen die Spannschienen eine um ihre Längsachse gekrümmte Innenwölbung mit vorzugsweise kreisbogenförmigem Querschnitt auf, wobei die Schellenteile der wenigstens einen Schelle eine vorzugsweise kugelabschnittsförmige Aussenwölbung aufweisen, mit der sie an der Innenwölbung einer Spannschiene anliegen. Hierdurch ist eine flächige Anlage der Schellenteile an der Spannschiene auch nach deren Winkeljustierung gewährleistet.

In Ausgestaltung der Erfindung sind die ersten und zweiten Schellenteile identisch ausgebildet. Hierdurch ist die Teilevielfalt reduziert, wodurch Herstellungs-und Lagerhaltungsaufwände reduziert sind.

In weiterer Ausgestaltung der Erfindung umfassen die Spannmittel wenigstens zwei beabstandet zueinander angeordnete Spannanker, die jeweils durch einen Durchbruch der beiden Spannschienen, sowie einen zwischen den Spannschienen angeordneten Distanzblock geführt sind. Hierdurch ist eine gleichmäßige Verspannung der beiden Spannschienen gegeneinander ermöglicht. Bevorzugt umfasst der Spannanker eine Gewindestange, auf die eine Mutter aufgeschraubt ist, über welche die Spannschienen gegeneinander verspannbar sind. Vorteilhaft ist die Mutter als Sechskantflanschmutter oder auch als Flügelmutter ausgebildet.

In Weiterbildung der Erfindung umfasst der Distanzblock ein erstes und ein zweites Blockstück, wobei das erste Blockstück an der ersten Spannschiene und das zweite Blockstück an der zweiten Spannschiene befestigt sind, wobei die Blockstücke jeweils wenigstens ein Befestigungselement aufweisen, das einen der Durchbrüche der jeweiligen Spannschiene diesen durchdringend hintergreift. Hierdurch ist eine Vormontage der Blockstücke an den Spannschienen ermöglicht.

In weiterer Ausgestaltung der Erfindung weisen die Blockstücke zwei Befestigungselemente auf, die in Form von gegenüberliegend angeordneten, mit Rastnasen versehenen Federzungen ausgebildet sind, wobei die Rastnasen sich jeweils in die der gegenüberliegenden Federzunge abgewandten Richtung erstrecken und den jeweiligen Durchbruch hintergreifen. Hierdurch ist eine einfache, rastende Montage der Blockstücke an den Spannschienen ermöglicht.

In weiterer Ausgestaltung der Erfindung weisen die Blockstücke eines jeden Distanzblocks eine Außenwölbung auf, mit der sie an der Innenwölbung einer Spannschiene anliegen. Hierdurch ist eine flächige Anlage der Blockstücke an den Spannschienen gewährleistet.

In Weiterbildung der Erfindung weist wenigstens eines der beiden Blockstücke eines Distanzblocks, vorzugsweise beide Blockstücke wenigstens ein Rastelement auf, mittels dessen es mit dem anderen Blockstück formschlüssig verbindbar ist. Hierdurch ist eine einfache, rastende Verbindung der jeweils mit einer Spannschiene verbundenen Blockstücke ermöglicht.

In Ausgestaltung der Erfindung sind die Blockstücke eines Distanzblocks identisch ausgebildet. Hierdurch ist die Bauteilvielfalt reduziert, wodurch Herstellungs- und Lageraufwände minimiert sind.

Andere Weiterbildungen und Ausgestaltungen der Erfindung sind in den übrigen Unteransprüchen angegeben. Ausführungsbeispiele der Erfindung sind in den Zeichnungen dargestellt und werden nachfolgend im Einzelnen beschrieben. Es zeigen:
- Figur 1: die schematische, räumliche Darstellung einer Vorrichtung zur Befestigung von zwei angedeuteten Rohren;
- Figur 2: die schematische Darstellung der Vorrichtung aus Figur 1 ohne Spannanker und Distanzblöcke
a) in der Ansicht von vorne;
b) in der Draufsicht;
c) in der Seitenansicht;

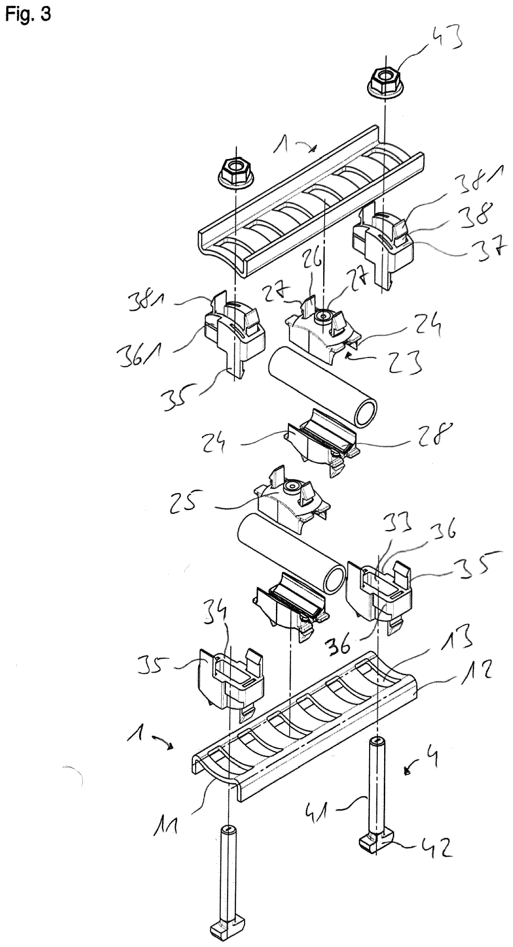

- Figur 3: die Vorrichtung aus Figur 1 in einer Explosionsdarstellung;
- Figur 4: die schematische Darstellung einer Vorrichtung zur Befestigung von Rohren in einer weiteren Ausführungsform
a) in der Ansicht von unten;
b) in der Ansicht von vorne;
c) in der Seitenansicht;
- Figur 5: die Detaildarstellung der Vorrichtung aus Figur 4
a) im Ausschnitt D;
b) im Ausschnitt X.

Die als Ausführungsbeispiel gewählte Vorrichtung besteht im Wesentlichen aus zwei parallel zueinander angeordneten Spannschienen 1, zwischen denen Schellen 2 angeordnet sind, sowie Distanzblöcke 3, durch die Spannanker 4 zur Verspannung der Spannschienen 1 gegeneinander geführt sind.

Die Spannschienen 1 sind im Ausführungsbeispiel als identische C-Profilschienen ausgebildet, die als Blechbiegestanzteil hergestellt sind. Alternativ ist auch eine Herstellung als Blechprofil oder als Kunststoffspritzgussteil möglich. Die Spannschienen 1 weisen eine Deckseite 11 auf, die an ihren Längsseiten jeweils in eine in einem stumpfen Winkel, vorliegend in einem Winkel von 95° angestellte Seitenleiste 12 übergeht. Die Deckseite 11 ist in Richtung der Seitenleisten nach innen gewölbt ausgebildet, wobei sie entlang ihrer Längsmittelachse eine zylindermantelabschnittsförmige Krümmung aufweist, deren Querschnitt kreisbogenförmig ausgebildet ist. In die Deckseite 11 sind beabstandet zueinander rechteckige, sich in Querrichtung zwischen den Seitenleisten erstreckende Durchbrüche 13 eingebracht.

Die Schellen 2 sind im Ausführungsbeispiel als Kunststoffspritzgussteil ausgebildet und umfassen jeweils ein erstes Schellenteil 21 und ein zweites Schellenteil 22. Im Ausführungsbeispiel sind die ersten und zweiten Schellenteile 21, 22 identisch ausgebildet. Die Schellenteile 21, 22 weisen eine rinnenförmige Ausnehmung 23 auf, die durch Seitenwände 24 begrenzt ist und durch die im montierten Zustand der Schelle 2 eine Durchführung 20 zur Aufnahme eines Rohres 5 ausgebildet ist. In der Ausnehmung 23 jedes Schellenteils 21, 22 sind beabstandet zueinander sich in Längsrichtung erstreckende Längsrippen 28 zur Anlage an ein aufgenommenes Rohr 5 angeordnet. Die Längsrippen sind aus einem Elastomer hergestellt und weisen einen trapezförmigen Querschnitt auf, derart, dass an den Begrenzungskanten zwischen dem aufgenommenen Rohr 5 und dem Längsrippen jeweils ein stumpfer Winkel α gebildet ist. Im Ausführungsbeispiel beträgt dieser Winkel zwischen 95° und 105°. Alternativ können die Längsrippen auch aus dem Kunststoff des jeweiligen Schellenteils 21, 22 hergestellt sein.

Die der Ausnehmung 23 abgewandte Oberseite 25 der Schellenteile 21, 22 weist eine Außenwölbung auf, die kugelabschnittsförmig ausgebildet ist. Mittig ist auf der Oberseite 25 ein zylinderförmiger Führungsdom 27 angeordnet. Beidseitig des Führungsdoms 27 sind diametral gegenüberliegend auf der Oberseite 25 zwei orthogonal nach außen sich erstreckende Federzungen 26 positioniert, die endseitig eine Rastnase 261 aufweisen, die sich jeweils in die dem Führungsdom 27 abgewandte Richtung nach außen erstrecken. Der Abstand der beiden Federzungen 26 entspricht im Wesentlichen der Länge der Durchbrüche 13 der Spannschiene 1. Über die eine Rastnase 261 aufweisenden Federzungen 26 sind die Schellenteile 21, 22 in jeweils einen Durchbruch 13 einer Spannschiene 1 einrastbar, wobei die Rastnasen 261 den Rand des jeweiligen Durchbruchs 13 hintergreifen. Das Schellenteil 21, 22 liegt sodann mit der Außenwölbung seiner Oberseite 25 an der nach innen gewölbten Deckseite 11 der Spannschiene 1 an.

Der Distanzblock 3 ist im Ausführungsbeispiel als Kunststoffspritzgussteil ausgebildet und umfasst ein erstes Blockstück 31 und ein zweites Blockstück 32, die vorliegend identisch ausgebildet sind. Die Blockstücke 31, 32 sind entsprechend den Schellenteilen 21, 22 länglich ausgebildet und weisen zentrisch eine quaderförmige Durchführung 33 auf. An der dem jeweils anderen Blockstück 31, 32 zugewandten Kopplungsfläche 34 sind seitlich an beiden Längsseiten des Blockstücks 31, 32 versetzt zueinander Rastzungen 35 angeordnet, die sich orthogonal zur Kopplungsfläche 34 in Richtung des jeweils anderen Blockstücks 31, 32 erstrecken. Neben jeder der beiden Rastzungen 35 ist der jeweils anderen Rastzunge 35 gegenüberliegend eine quaderförmige Ausnehmung 36 vorhanden, in der eine Stufe 361 angeordnet ist. Die beiden Blockstücke 31, 32 sind durch Anlegen ihrer Kopplungsflächen 35 miteinander rastend verbindbar, wobei deren Rastzungen 35 jeweils entlang einer Ausnehmung 36 des jeweils anderen Blockstücks 31, 32 entlang gleiten, bis sie die dort vorhandene Stufe 361 rastend hintergreifen. Die Rastzungen 35 sind dann von den Ausnehmungen 36 aufgenommen, die sie weitgehend ausfüllen.

Die Durchführung 33 begrenzend weisen die Blockstücke 31, 32 an ihrer der Kopplungsfläche 34 gegenüberliegenden Oberseite 37 jeweils zwei gegenüberliegend angeordnete Federzungen 38 auf, die entsprechend den Federzungen 26 der Schellenteile 21, 22 endseitig Rastnasen 381 aufweisen, die sich jeweils in die der jeweils gegenüberliegenden Federzunge 38 abgewandten Richtung nach außen erstrecken. Der Abstand der beiden Federzungen 38 entspricht wiederum im Wesentlichen der Länge der Durchbrüche 13 der Spannschiene 1. Über die Federzungen 38 sind die Blockstücke 31, 32 in jeweils einen Durchbruch 13 einer Spannschiene 1 einrastbar, wobei die Rastnasen 381 den Rand des jeweiligen Durchbruchs 13 hintergreifen.

Der Spannanker 4 ist im Wesentlichen aus einer Gewindestange 41 gebildet, die endseitig ein Kopfstück 42 aufweist, das im Ausführungsbeispiel in Art eines Hammerkopfes ausgebildet ist. Die Gewindestange 41 weist vorliegend ein sich über ihre gesamte Länge erstreckendes Außengewinde auf. Das Außengewinde kann sich jedoch auch nur über einen dem Kopfstück 42 gegenüberliegenden endseitigen Bereich erstrecken.

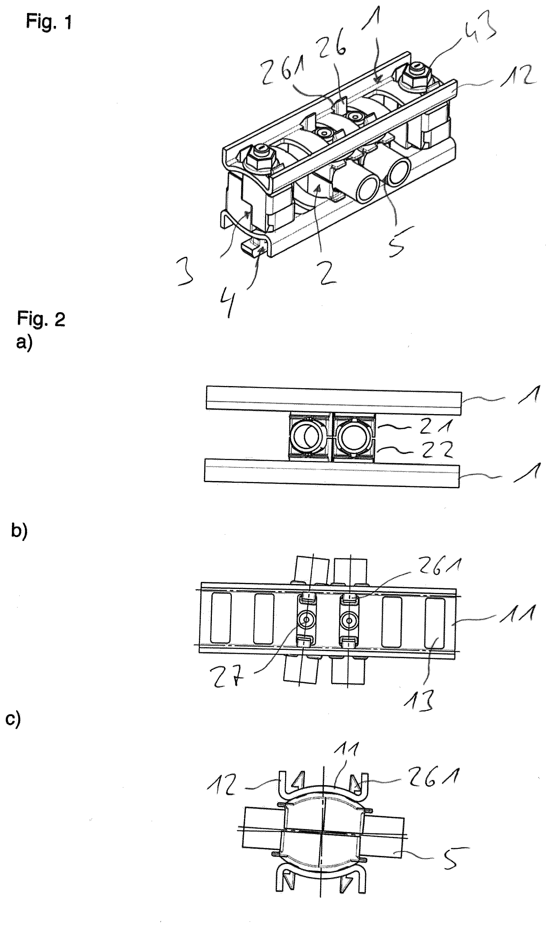

Im Ausführungsbeispiel gemäß Figur 1 sind zwei Schellen 2 angeordnet, deren erste Schellenteile 21 über ihre Federzungen 26 an zwei benachbarten Durchbrüchen 13 einer ersten Spannschiene 1 an ihrer den Seitenleisten abgewandten Seite und deren zweiten Schellenteile 21 über ihre Federzungen 26 an zwei benachbarten Durchbrüchen 13 einer zweiten Spannschiene 1 wiederum an ihrer den Seitenleisten abgewandten Seite rastend befestigt sind. An den beiden äußeren Durchbrüchen 13 der ersten Spannschiene 1 ist jeweils ein erstes Blockstück 31 und an den beiden äußeren Durchbrüchen 13 der zweiten Spannschiene 1 ist jeweils ein zweites Blockstück 31 über deren Federzungen 38 rastend befestigt. Nach Einlegen jeweils eines Rohres 5 in die ersten Schellenteile 21 der ersten Spannschiene 1 sind die an der zweiten Spannschiene 1 befestigten zweiten Schellenteile 22 auf die ersten Schellenteile 21 positioniert, wobei die ersten Blockstücke 31 auf die zweiten Blockstücke 32 sich mittels der Rastzungen 35 miteinander verrastend aufgesetzt sind. Durch die miteinander fluchtenden Durchführungen 33 der Blockstücke 31, 32 eines jeden Distanzblocks 3 ist die Gewindestange 41 eines Spannankers 4 geführt, bis das Kopfteil an einer Spannschiene 1 anliegt und endseitig mittels einer Sechskantflanschmutter 43 gespannt. Über die beiden Spannanker 4 sind die Schellenteile 21, 22 einer jeden Schelle 2 über die gegeneinander verspannten Spannschienen 1 mit ihrem Längsrippen 28 gegen das jeweils aufgenommene Rohr 5 verspannt. Alternativ können die Spannanker 4 auch in einer unterhalb der Spannschiene 1 vorhandenen Struktur, beispielsweise einem Kabelkanal verankert werden.

Wie insbesondere in Figur 2 b) ersichtlich weist eines der befestigten Rohre 5 in seinem Verlauf eine Winkelabweichung auf. Durch die justierbare Befestigung der beiden Schellenteile 21, 22 werden diese entsprechend verschwenkt, wodurch eine exakt konzentrische Aufnahme auch dieses Rohres 5 in der Schelle 2 gewährleistet ist.

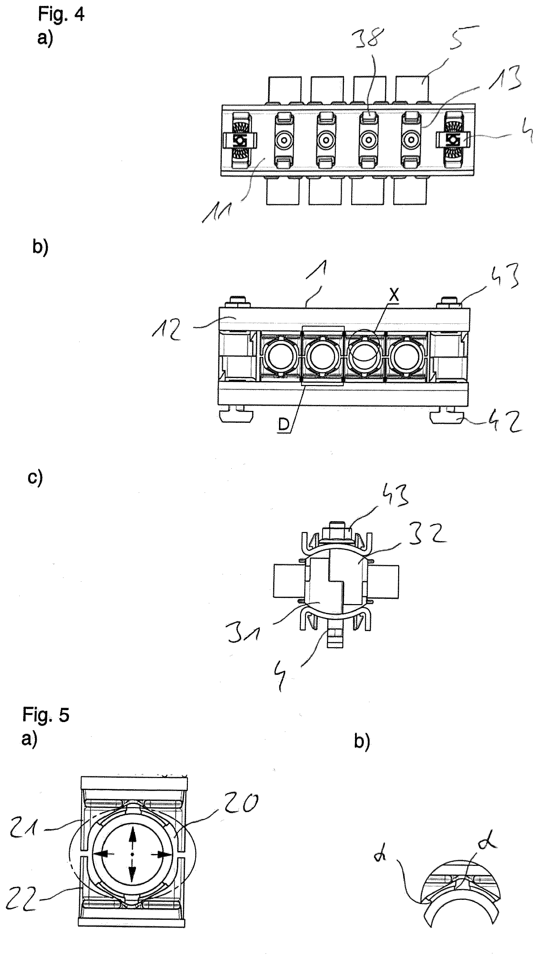

Im Ausführungsbeispiel gemäß Figur 4 sind vier Schellen 2 zwischen den beiden Spannschienen 1 angeordnet, wobei an jedem Durchbruch 13 der Spannschienen 1 ein Schellenteil 21, 22 bzw. jeweils endseitig ein Blockstück 32 rastend befestigt ist. In jede der Schellen 2 ist ein Rohr 5 zwischen deren Längsrippen 28 eingespannt, wobei an den Begrenzungskanten der Längsrippen 28 zum Rohr 5 jeweils ein stumpfer Winkel a vorliegt (vgl. Figur 5 b) ). In Figur 5 a) ist der Bewegungsgrad der justierbar befestigten Schelle zum Ausgleich von Winkelabweichungen eines einzuspannenden Rohres 5 gezeigt.

Die erfindungsgemäße Vorrichtung zeichnet sich insbesondere durch eine einfache Montage sowie die Möglichkeit der einfachen situationsbedingten Bestückung mit Schellen vor Ort aus, wobei durch die justierbare Befestigung der Schellenteile 21, 22 an den Spannschienen 1 ein Ausgleich von Winkelabweichungen von zu befestigenden Rohren 5 ermöglicht ist.

## Patentansprüche

1. Vorrichtung zur Befestigung von Rohren, insbesondere im Bereich Schiffbau und Offshore-Plattformen, umfassend wenigstens eine Schelle (2), die ein erstes Schellenteil (21) und ein zweites Schellenteil (22) umfasst, die jeweils eine Ausnehmung (23) aufweisen, die im monierten Zustand eine Durchführung (20) zur Aufnahme eines Rohres (5) ausbilden, in der beabstandet zueinander wenigstens drei Längsrippen (28) zur Anlage an einem aufgenommenen Rohr (5) angeordnet sind, die sich in Längsrichtung dieses Rohres (5) erstrecken, wobei zwei Spannschienen (1) angeordnet sind, wobei das erste Schellenteil (21) der wenigstens einen Schelle (2) an der ersten Spannschiene (1) und das zweite Schellenteil (22) der wenigstens einen Schelle (2) an der zweiten Spannschiene (1) justierbar befestigt sind, und wobei die beiden Spannschienen (1) gegenüberliegend über Spannmittel verbunden sind, über die sie gegeneinander verspannbar sind, wodurch die gegenüberliegend angeordneten ersten und zweiten Schellenteile (21, 22) der wenigstens einen Schelle (2) gegen ein von dieser aufgenommenes Rohr (5) verspanbar sind, **dadurch gekennzeichnet, dass** die beiden Spannschienen (1) jeweils mit Durchbrüchen (13) versehen sind, wobei die ersten und zweiten Schellenteile (21, 22) jeweils wenigstens ein Befestigungselement aufweisen, das einen dieser Durchbrüche (13) diesen durchdringend hintergreift, wobei die Schellenteile (21, 22) zwei Befestigungselemente aufweisen, die in Form von gegenüberliegend angeordneten, mit Rastnasen (261) versehenen Federzungen (26) ausgebildet sind, wobei die Rastnasen (261) sich jeweils in die der gegenüberliegenden Federzunge (26) abgewandten Richtung erstrecken und den jeweiligen Durchbruch (13) hintergreifen und wobei die Schellenteile (21, 22) zwischen den beiden Befestigungselementen einen Führungsdom (27) aufweisen, der durch den jeweiligen Durchbruch (13) hindurchragt.

2. Vorrichtung nach Anspruch 1, **dadurch gekennzeichnet, dass** wenigstens zwei, vorzugsweise alle Durchbrüche (13) rechteckig ausgebildet und gleichmäßig beabstandet parallel zueinander in der jeweiligen Spannschiene (1) angeordnet sind.

3. Vorrichtung nach Anspruch 1 oder 2, **dadurch gekennzeichnet, dass** der Führungsdom (27) der Schellenteile (21, 22) zylinderförmig ausgebildet ist.

4. Vorrichtung nach einem der vorgenannten Ansprüche, **dadurch gekennzeichnet, dass** die Spannschienen (1) eine um ihre Längsachse gekrümmte Innenwölbung mit vorzugsweise kreisbogenförmigem Querschnitt aufweisen, wobei die Schellenteile (21, 22) der wenigstens einen Schelle (2) eine vorzugsweise kugelabschnittsförmige Außenwölbung aufweisen, mit der sie an der Innenwölbung einer Spannschiene (1) anliegen.

5. Vorrichtung nach einem der vorgenannten Ansprüche, **dadurch gekennzeichnet, dass** die ersten und zweiten Schellenteile (21, 22) identisch ausgebildet sind.

6. Vorrichtung nach einem der vorgenannten Ansprüche, **dadurch gekennzeichnet, dass** die Spannmittel wenigstens zwei beabstandet zueinander angeordnete Spannanker (4) umfassen, die jeweils durch einen Durchbruch (13) der beiden Spannschienen (1) sowie einen zwischen den Spannschienen (1) angeordneten Distanzblock (3) geführt sind.

7. Vorrichtung nach Anspruch 6, **dadurch gekennzeichnet, dass** der Spannanker (4) eine Gewindestange (41) umfasst, auf den eine Mutter, vorzugsweise eine Sechskantflanschmutter (43) aufgeschraubt ist, über welche die Spannschienen (1) gegeneinander verspannbar sind.

8. Vorrichtung nach Anspruch 6 oder 7, **dadurch gekennzeichnet, dass** der Distanzblock (3) ein erstes Blockstück (31) und ein zweites Blockstück (32) umfasst, wobei das erste Blockstück (31) an der ersten Spannschiene (1) und das zweite Blockstück (32) an der zweiten Spannschiene (1) befestigt sind, wobei die Blockstücke (31, 32) jeweils wenigstens ein Befestigungselement aufweisen, das einen der Durchbrüche (13) der jeweiligen Spannschiene (1) diesen durchdringend hintergreift.

9. Vorrichtung nach Anspruch 8 **dadurch gekennzeichnet, dass** die Blockstücke (31, 32) zwei Befestigungselemente aufweisen, die in Form von gegenüberliegend angeordneten, mit Rastnasen (381) versehenen Federzungen (38) ausgebildet sind, wobei die Rastnasen (381) sich jeweils in die der gegenüberliegenden Federzunge (38) abgewandten Richtung erstrecken und den jeweiligen Durchbruch (13) hintergreifen.

10. Vorrichtung nach Anspruch 9, **dadurch gekennzeichnet, dass** die Blockstücke (31, 32) eines jeden Distanzblocks (3) eine Außenwölbung aufweisen, mit der sie an der Innenwölbung einer Spannschiene (1) anliegen.

11. Vorrichtung nach einem der Ansprüche 8 bis 10, **dadurch gekennzeichnet, dass** wenigstens eines der beiden Blockstücke (31, 32) eines Distanzblocks (3), vorzugsweise beide Blockstücke (31, 32) wenigstens ein Rastelement aufweisen, mittels dessen es mit dem anderen Blockstück (31, 32) formschlüssig verbindbar ist.

12. Vorrichtung nach Anspruch 11, **dadurch gekennzeichnet, dass** die Blockstücke (31, 32) eines Distanzblocks (3) identisch ausgebildet sind.

## Claims

1. Device for fixing pipes, in particular in the field of shipbuilding and offshore platforms, comprising at least one clamp (2), which comprises a first clamp part (21) and a second clamp part (22), which each have a recess (23), which in the mounted state form a passage (20) for receiving a pipe (5), in which at least three longitudinal ribs (28) for abutment against a received pipe (5) are arranged at a distance from one another, which extend in the longitudinal direction of this pipe (5), wherein two clamping rails (1) are arranged, wherein the first clamp part (21) of the at least one clamp (2) is adjustably fixed to the first clamping rail (1) and the second clamp part (22) of the at least one clamp (2) is adjustably fixed to the second clamping rail (1), and wherein the two clamping rails (1) are connected opposite one another via clamping means, via which they can be clamped against one another, whereby the first and second clamp parts (21, 22) of the at least one clamp (2) arranged opposite one another can be clamped against a pipe (5) received thereby, **characterised in that** the two clamping rails (1) are each provided with openings (13), wherein the first and second clamp parts (21, 22) each have at least one fixing element, which engages behind one of these openings (13) so as to penetrate it, wherein the clamp parts (21, 22) have two fixing elements, which are designed in the form of oppositely arranged spring tongues (26) provided with latching lugs (261), wherein the latching lugs (261) each extend in the direction facing away from the opposite spring tongue (26) and engage behind the respective opening (13) and wherein the clamp parts (21, 22) have a guide dome (27) between the two fixing elements, which projects through the respective opening (13).

2. Device according to claim 1, **characterised in that** at least two, preferably all openings (13) are of rectangular design and are arranged parallel to one another and evenly spaced apart in the respective clamping rail (1).

3. Device according to claim 1 or 2, **characterised in that** the guide dome (27) of the clamp parts (21, 22) is of cylindrical design.

4. Device according to one of the previous claims, **characterised in that** the clamping rails (1) have an inner curvature curved about their longitudinal axis with a cross-section preferably in the shape of a circular arc, wherein the clamp parts (21, 22) of the at least one clamp (2) have an outer curvature preferably in the shape of a spherical section, with which they rest against the inner curvature of a clamping rail (1).

5. Device according to one of the previous claims, **characterised in that** the first and second clamp parts (21, 22) are of identical design.

6. Device according to one of the previous claims, **characterised in that** the clamping means comprise at least two clamping anchors (4) arranged at a distance from one another, which are each guided through an opening (13) of the two clamping rails (1) as well as a spacer block (3) arranged between the clamping rails (1).

7. Device according to claim 6, **characterised in that** the clamping anchor (4) comprises a threaded rod (41), onto which a nut, preferably a hexagonal flange nut (43), is screwed, via which the clamping rails (1) can be clamped against one another.

8. Device according to claim 6 or 7, **characterised in that** the spacer block (3) comprises a first block piece (31) and a second block piece (32), wherein the first block piece (31) is fixed to the first clamping rail (1) and the second block piece (32) is fixed to the second clamping rail (1), wherein the block pieces (31, 32) each have at least one fixing element, which engages behind one of the openings (13) of the respective clamping rail (1) so as to penetrate it.

9. Device according ton claim 8, **characterised in that** the block pieces (31, 32) have two fixing elements, which are designed in the form of oppositely arranged spring tongues (38) provided with latching lugs (381), wherein the latching lugs (381) each extend in the direction facing away from the opposite spring tongue (38) and engage behind the respective opening (13).

10. Device according to claim 9, **characterised in that** the block pieces (31, 32) of each spacer block (3) have an outer curvature, with which they rest against the inner curvature of a clamping rail (1).

11. Device according to one of claims 8 to 10, **characterised in that** at least one of the two block pieces (31, 32) of a spacer block (3), preferably both block pieces (31, 32), have a latching element, by means of which it can be positively connected to the other block piece (31, 32).

12. Device according to claim 11, **characterised in that** the block pieces (31, 32) of a spacer block (3) are of identical design.

## Revendications

1. Dispositif de fixation de tuyaux, en particulier dans le domaine de la construction navale et des plateformes offshore, comprenant au moins un collier (2) composé d'une première partie (21) de collier et d'une deuxième partie (22) de collier présentant chacune un évidement (23) et qui à l'état monté forment un passage (20) destiné à loger un tuyau (5), passage dans lequel au moins trois nervures longitudinales (28) sont disposées mutuellement distantes pour appliquer contre un tuyau (5) logé, et qui s'étendent dans le sens longitudinal de ce tuyau (5), sachant que sont disposés deux profilés de serrage (1), sachant que la première partie (21) d'au moins un collier (2) est fixée de façon ajustable contre le premier profilé de serrage (1) et que la deuxième partie (22) d'au moins un collier (2) est fixée de la même façon contre le deuxième profilé de serrage (1), et sachant que les deux profilés de serrage (1) sont reliés, en se faisant face, via des moyens de serrage via lesquels ils sont serrables l'un contre l'autre, ceci faisant que les première et deuxième parties (21, 22) - disposées l'une en face de l'autre - d'au moins un collier (2) sont serrables contre un tuyau (5) logé dans celui-ci, **caractérisé en ce que** les deux profilés de serrage (1) sont munis chacun d'ouvertures de passage (13), sachant que les première et deuxième parties (21, 22) du collier présentent chacune au moins un élément de fixation passant derrière l'une de ces ouvertures de passage (13) qu'il traverse, sachant que les parties (21, 22) du collier présentent deux éléments de fixation configurées en forme de languettes ressorts (26) disposées l'une en face de l'autre et munies de crans de retenue (261), sachant que les crans de retenue (261) s'étendent chacun dans la direction ne regardant pas la languette ressort (26) située en face, et qu'ils passent derrière l'ouverture de passage (13) respective et sachant que les parties (21, 22) du collier présentent, entre les deux éléments de fixation, un dôme de guidage (27) faisant saillie à travers l'ouverture de passage (13) respective.

2. Dispositif selon la revendication 1, **caractérisé en ce qu'**au moins deux ouvertures de passage (13), de préférence toutes, sont configurées rectangulaires et disposées mutuellement parallèles à une distance uniforme dans le profilé de serrage (1) respectif.

3. Dispositif selon la revendication 1 ou 2, **caractérisé en ce que** le dôme de guidage (27) des parties (21, 22) de collier est configuré de forme cylindrique.

4. Dispositif selon l'une des revendications précédentes, **caractérisé en ce que** les profilés de guidage (1) présentent une concavité intérieure incurvée autour de leur axe longitudinal, avec une section de préférence en forme d'arc de cercle, sachant que les parties (21, 22) d'au moins un collier (2) présentent une convexité extérieure de préférence de forme sphéroïdale leur permettant d'appliquer contre la concavité intérieure d'un profilé de serrage (1).

5. Dispositif selon l'une des revendications précédentes, **caractérisé en ce que** les première et deuxième parties (21, 22) de collier sont de configuration identique.

6. Dispositif selon l'une des revendications précédentes, **caractérisé en ce que** les moyens de serrage présentent au moins deux ancres de serrage (4) disposées réciproquement distantes, qui sont guidées chacune à travers une ouverture de passage (13) ménagée dans les deux profilés de serrage (1), ainsi qu'à travers un bloc d'écartement (3) disposé entre les profilés de serrage (1).

7. Dispositif selon la revendication 6, **caractérisé en ce que** l'ancre de serrage (4) présente une tige filetée (41) sur laquelle est vissé un écrou, de préférence un écrou hexagonal (43) de bridage, via lequel les profilés de serrage (1) peuvent être serrés l'un contre l'autre.

8. Dispositif selon la revendication 6 ou 7, **caractérisé en ce que** le bloc d'écartement (3) comprend un premier bloc partiel (31) et un deuxième bloc partiel (32), sachant que le premier bloc partiel (31) est fixé contre le premier profilé de serrage (1) et que le deuxième bloc partiel (32) est fixé contre le deuxième profilé de serrage (1), sachant que les blocs partiels (31, 32) présentent chacun au moins un élément de fixation passant derrière l'une des ouvertures (13) - qu'il traverse - du profilé de serrage (1) respectif.

9. Dispositif selon la revendication 8, **caractérisé en ce que** les blocs partiels (31, 32) présentent deux éléments de fixation configurés en languettes ressorts (38) disposées de sorte à se faire face et munies de crans de retenue (381), sachant que les crans de retenue (381) s'étendent respectivement dans la direction ne regardant pas la languette ressort (38) située en face, et qu'ils passent derrière l'ouverture (13) respective.

10. Dispositif selon la revendication 9, **caractérisé en ce que** les blocs partiels (31, 32) de chaque bloc d'écartement (3) présentent une convexité extérieure par laquelle ils appliquent contre la concavité intérieure d'un profilé de serrage (1).

11. Dispositif selon l'une des revendications 8 à 10, **caractérisé en ce qu'**au moins l'un des deux blocs partiels (31, 32) d'un bloc d'écartement (3), de préférence les deux blocs partiels (31, 32), présente(nt) au moins un élément à cran au moyen duquel il(s) est/sont reliable(s) par adhérence de formes avec l'autre bloc partiel (31, 32).

12. Dispositif selon la revendication 11, **caractérisé en ce que** les blocs partiels (31, 32) d'un bloc d'écartement (3) sont de configuration identique.
